# EUROPÄISCHE PATENTSCHRIFT

(11) **EP 1 257 179 B1**
(45) Veröffentlichungstag und Bekanntmachung des Hinweises auf die Patenterteilung: **12.01.2005**
(21) Anmeldenummer: 01911684.7
(22) Anmeldetag: 22.02.2001
(51) Int. Cl.: A23L 1/22

(54) **WÜRZMISCHUNG MIT HOHEM SALZGEHALT**
SEASONING MIXTURE WITH A HIGH SALT CONTENT
MELANGE POUR ASSAISONNEMENT A HAUTE TENEUR EN SEL

(30) Priorität: 23.02.2000 DE 10008156
(43) Veröffentlichungstag der Anmeldung: 20.11.2002
(73) Patentinhaber: FUCHS GmbH & Co., 49326 Melle (DE)
(72) Erfinder: VICOMTE VAN AEFFERDEN, Baudouin, 49201 Dissen (DE); HERMEY, Dietmar, 49201 Dissen (DE); FUCHS, Dieter, 49326 Melle (DE)
(74) Vertreter: Winkler, Andreas, Dr.
(86) Internationale Anmeldenummer: PCT/EP2001/002005
(87) Internationale Veröffentlichungsnummer: WO 2001/062107

(56) Entgegenhaltungen:
- EP-A- 0 130 821
- DE-A- 2 160 550
- GB-A- 1 265 682
- US-A- 5 206 049
- US-A- 5 356 647
- PATENT ABSTRACTS OF JAPAN vol. 006, no. 250 (C-139), 9. Dezember 1982 (1982-12-09) & JP 57 146558 A (AJINOMOTO KK), 10. September 1982 (1982-09-10)
- DATABASE WPI Section Ch, Week 198237 Derwent Publications Ltd., London, GB; Class D11, AN 1982-77406E XP002168643 & JP 57 125641 A (RIKEN VITAMIN CO), 5. August 1982 (1982-08-05)
- DATABASE EPODOC [Online] EUROPEAN PATENT OFFICE, THE HAGUE, NL; CN 1108492, 20. September 1995 (1995-09-20) WU YANGJUN: "Multi-vitamin gourmet powder" XP002168642
- DATABASE WPI Section Ch, Week 197408 Derwent Publications Ltd., London, GB; Class A97, AN 1974-14745V XP002168644 AJINMOTO AK: "Coated seasoning powder-for smoked and dried fish" & JP 49 004949 B (AJINOMOTO KK), 4. Februar 1974 (1974-02-04)

## Beschreibung

Die Erfindung betrifft ein Verfahren zum Würzen von Lebensmitteln unter Verwendung einer Würzmischung.

Zur gewerblichen Bereitstellung größerer Mengen Geflügel wird dieses mit Marinaden, Salzlösungen oder Trockenwürzmischungen in Tumblern behandelt. Durch diese Verfahrensweise ist nicht sichergestellt, daß die gewünschte Menge an Gewürz oder Salz nach der Behandlung auf dem Lebensmittel noch vorhanden ist. Nachteilig an dieser Verfahrensweise ist ferner, daß das Geflügel dem Fließband entnommen, dem Tumbler zugeführt und nach einer etwa 20minütigen Behandlung wieder zurück auf das Fließband gebracht werden muß. Durch diese Verfahrensweise geht einerseits Zeit verloren, andererseits erfolgt im Tumbler in dem Fall, in dem ein durch Krankheitserreger infiziertes Geflügel enthalten ist, ein Kontakt mit anderem nicht infiziertem Geflügel. Dadurch geht die gesundheitliche Unbedenklichkeit der gesamten Charge verloren. Nachteilig an der Behandlung im Tumbler ist ferner, daß das Geflügel deformiert werden kann.

Alternativ erfolgt das Würzen von Geflügel in kleineren Brätereien durch Aufstreichen von Marinade oder Salzlösungen mittels Pinsel.

Aus der JP 57146558 A (abstract) ist ein Verfahren zum Würzen von Lebensmittel bekannt, bei dem Gewürze in einem verflüssigten Fett eingemischt werden und anschließend das wiederverfestigte Fett auf das Lebensmittel aufgetragen wird.

Aus der US 5,356,647 ist ein Verfahren zum Vermindern des Feuchtigkeitsverlusts und des Aromaverlusts von Gewürzen bekannt, die auf einem gegarten Fleischstück aufgebracht sind, wobei das Verfahren zunächst ein Beschichten des Fleischstücks mit Glycerol und dann das Auftragen einer Gewürzschicht einschließt.

Die DE 2160550 A beschreibt ein Verfahren zur Oberflächenwürzung von frischem Fleisch und dergleichen mittels Würzscheiben aus Gelatine, Gewürzextrakten, Aromen und Salzen, wobei zur Würzung geeignete Extrakte, Aromen und Salze einer erwärmten, flüssigen Gelatine durch Einrühren zugeführt werden, so daß eine innige Lösung entsteht, und wobei diese Lösung in eine für Oberflächenwürzung günstige Form gebracht und so dann wie übliche Gelatine getrocknet wird.

Die EP 0130821 A beschreibt eine Salzsubstitutzusammensetzung, welche beschichtete Partikel umfaßt, wobei jedes Partikel einen Kern umfaßt, der Kaliumchlorid umfaßt, und eine Beschichtung auf dem Kern, wobei die Beschichtung Maltodextrin umfaßt.

Schließlich offenbart die WO 94/00024 ein Verfahren zum Herstellen eines mit einem Gel beschichteten Nahrungsmittels, wobei zunächst eine wässrige Teigdispersion, die Natriumund Calciumionen enthält, auf die Oberfläche des Nahrungsmittels aufgebracht wird, dann das so beschichtete Nahrungsmittel mit Semmelbröseln bestreut wird und schließlich auf das Nahrungsmittel eine wässrige, Gel bildende Lösung aufgetragen wird, um einen thermisch irreversiblen Gelfim um das Nahrungsmittel zu bilden.

Der Erfindung liegt die Aufgabe zugrunde, durch kürzestmögliche Behandlung ein qualitativ hochwertig gewürztes Lebensmittel, insbesondere Geflügel, zu erhalten.

Gelöst wird diese Aufgabe durch die Verfahren nach den Ansprüchen 1 und 6 sowie das so hergestellte Lebensmittel nach Anspruch 15. Weitere Ausführungsformen ergeben sich aus dem Unteransprüchen.

Gegenstand der Erfindung ist ein mit der erfindungsgemäßen Würzmischung beschichtetes . Lebensmittel. Vorzugsweise bildet das Würzmittel eine möglichst geschlossene feste Schicht auf dem Lebensmittel aus. Die Schicht, die das Lebensmittel bedeckt, kann 0,1 bis 2 mm, vorzugsweise 0,3 bis 1 mm, dick sein. Eine derart geschlossenen filmartige Beschichtung wird durch herkömmliches Würzen nicht erzielt.

Die Würzmischung zeichnet sich durch eine für flüssig aufzutragende Würzmischungen außergewöhnlich hohe Salzkonzentration aus. Der Salzanteil ist so hoch, daß bei Anwendung der Würzmischung im flüssigen Zustand das Salz größtenteils in fester Form homogen in dem dickflüssigen Gemisch verteilt vorliegt. Als überraschend wird angesehen, daß diese Würzmischung nach dem Wiedererstarren auf dem zu würzenden Gut eine gleichmäßige Schicht ausbildet. Durch diese Art der Verteilung auf dem Würzgut treten bei der Lagerung keine Entwässerungseffekte wegen der hohen Salzkonzentration auf.

Diese Schicht auf der Lebensmitteloberfläche ist verantwortlich für ein besseres Rückhaltevermögen von Salz und Gewürzen auf dem Lebensmittel und bietet auch beim Grillen oder Backen einen Schutz vor dem partiellen Austrocknen und Verbrennen des Lebensmittels. Dies wird durch bekannte Trockenwürzmischungen nicht geleistet. Anders als die bekannten Marinaden bleiben die erfindungsgemäß verwendeten Würzmischungen nach der Behandlung der Lebensmittel auf dem Gut und laufen nicht von diesem ab. Die erfindungsgemäß verwendeten Würzmischungen zeigen deutlich bessere visuelle und geschmackliche Auswirkungen auf das Lebensmittel als die bisher verwendeten Marinaden und Trockenwürzmischungen. Insbesondere kann erfindungsgemäßvermieden werden, daß bei der Verpackung in einer Folie unter Vakuumanwendung die Würzmischung wie bei Marinaden üblich in die bei Anlegen das Vakuums gebildeten Hohlräume gezogen wird. Vorteilhaft ist auch, daß das Würzmittel auf dem Gut nach dessen Verpackung nicht schmiert.

Ein weiterer Vorteil, der mit der erfindungsgemäß verwendeten Würzmischung erreicht wird, besteht darin, daß beispielsweise Geflügel zum Würzen nicht vom Fließband entfernt werden muß, wenn die erfindungsgemäß verwendete Würzmischung auf das Lebensmittel aufgebracht wird.

Die Würzmischungen liegen vor deren Einsatz in fester Form als Gemische von Salz und Fett, gegebenenfalls gemeinsam mit weiteren Würzstoffen und Hilfsmittel, vor. Während der Anwendung sind die Würzmischungen flüssig und können eine Viskosität von 380 bis 2.000 mPas bei Anwendungstemperatur, gemessen mit einem Haake Viskotester 6R (Spindel R4, 100 Touren/Sek.), aufweisen. Die Verflüssigung der festen, beispielsweise pulverförmigen, Würzmischungen erfolgt unter Wärmezufuhr, wobei das Fett schmilzt. Auch im Falle der kein Fett enthaltenden Würzmitteln kann die Verflüssigung durch Erwärmen erfolgen oder dadurch, daß man die verflüssigbaren, kein Fett enthaltenden Mittel oder Würzmischungen mit Wasser mischt. Diese Mittel erstarren beim Erkalten.

Der Salzgehalt der Würzmischungen beträgt vorzugsweise 20 bis 60 Gew.%, gemäß einer weiteren bevorzugten Ausführungsform 30 bis 55 Gew.%, bezogen auf das Gewicht der Würzmischung. Erfindungsgemäß eingesetzte Salze sind vorzugsweise Kochsalz oder Gemische von Kochsalz mit anorganischen Salzen, organische Salze oder deren Gemische. Die erfindungsgemäß zu verwendenden Salze können auch mineralische Bestandteile enthalten. Das Salz kann im Haushalt übliche Korngrößen aufweisen oder feinstteilig sein.

Als vorteilhaft hat sich der Einsatz von Kieselgelen erwiesen. Kieselgele erhöhen die Rieselfähigkeit der auf festen Fetten basierenden trockenen Würzmischungen und erleichtern deren Herstellung und Verpackung.

Die in den Würzmischungen verwendeten Fette sind solche mit einem Schmelz- oder Erstarrungspunkt ab etwa -5 °C, vorzugsweise ab 10 oder 20 bis 60°C. Solche Fette können ungehärtete pflanzliche und tierische oder gehärtete pflanzliche und tierische Fette, wie Rindertalg, gehärtetes Sojaöl, Palmkernfett sein. Geeignet können ferner synthetische Triglyceride wie Tripalmitatglycerin sein.

Die in den Würzmischungen anstelle eines Fetts oder im Gemisch mit einem der zuvor genannten Fette eingesetzten verflüssigbaren Mittel sind solche, die zumindest bei Temperaturen im Bereich von 0 °C und darunter bis etwa 50 °C fest sind oder solche, die durch Zugabe von Wasser verflüssigbar sind und nach Auftragen auf das kalte Lebensmittel fest werden. Solche Mittel sind beispielsweise Hydrokolloide, d.h. wasserlösliche , oder teilweise wasserlösliche natürliche oder synthetische Polymere, die in wässrigen Systemen Gele oder viskose Lösungen bilden. Beispielhaft seien Alginate, Carragen, Pektin, Polydextrose, Polyvinylalkohol, Polyvinylpyrrolidon und Dextran genannt. Solche Mittel sind weiter Gelatine und in der Ernährung übliche Emulgatoren, die die gleichen Schmelzeigenschaften wie die zuvor genannten Fette aufweisen. Geeignet sind schließlich schmelzbare Polysaccharide und andere Kohlenhydrate wie Dextrose, Xylit und Zuckeralkohole wie Sorbit. Geeignet sind somit alle genießbaren Materialien, die im Gemisch mit Salz auf dem Lebensmittel bei Lagerungstemperatur der Lebensmittel eine Schicht auf diesem ausbilden können.

Die Würzmischung kann darüber hinaus Gewürze, Kräuter, Pflanzen, Extrakte, Aromastoffe, Tee, Kaffee, Gemüse, Arzneipflanzen, getrocknete oder frische Saaten, ganz, gerebelt oder gemahlen, und Geschmacksverstärker enthalten. Diese Zusätze können in Mengen bis zu 50%, beispielsweise 10 bis 40%, der Würzmischung zugesetzt sein.

Die Würzmischung kann ferner Verdickungsmittel enthalten. Geeignete Verdickungsmittel sind solche, die in der Lebensmittelindustrie üblicherweise eingesetzt werden wie Stärke, Gelatine, Agar-Agar, Pektinprodukte, Guarmehl, Johannisbrotkernmehl und Xanthane. Die Verdickungsmittel können in Mengen bis zu 15 Gew.%, beispielsweise 0,1 bis 12 Gew.%, bezogen auf die Masse der Würzmischung, eingesetzt werden.

Ferner kann die Würzmischung Haftungsverstärker in einer Menge von bis zu 10 Gew.%, beispielsweise 1 bis 8 Gew.%, bezogen auf das Gewicht der trockenen Würzmischung, enthalten. Solche Haftungsverstärker sind Zuckerstoffe, Gemische verschiedener Zuckerstoffe und genießbare Faserstoffe. Geeignete Zuckerstoffe sind Mono- und Disaccharide, beispielsweise Glucose, Maltose, Fructose, Manose, Saccharose, Lactose, Maltodextrine und Invertzucker. Sie können zur Herstellung der Würzmischung in Form von Pulvern, Lösungen, insbesondere Sirupen, zugesetzt werden.

Die Würzmischungen können weitere in der Lebensmittelindustrie übliche Zusatzstoffe enthalten. Solche sind beispielsweise Trennmittel wie Tricalciumphosphat, Calciumstearat oder Erdalkalicarbonate.

Die Würzmischung ist geeignet zum Würzen von Geflügel, Geflügelteilen, Fleisch, Fisch, Gemüse und Teigwaren. Bei der Behandlung mit der Würzmischung kann Fleisch eine Temperatur von 4 bis 9°C, Geflügel eine Temperatur von etwa 2 bis 9 °C und Teigwaren eine Temperatur von 15 bis 25°C aufweisen. Andere Temperaturen des zu würzenden Lebensmittels sind möglich.

Die Würzmischung kann nach Verflüssigung durch Erwärmen auf das zu würzende Gut aufgesprüht oder aufgestrichen werden. Die Verflüssigung erfolgt je nach eingesetztem verflüssigbaren Material durch Wärmeeinwirkung oder durch Zugabe von Wasser. Ferner ist es möglich, das zu würzende Gut in die flüssige oder dickflüssige Würzmischung zu tauchen. Beide Maßnahmen lassen sich am Fließband durchführen, so daß das zu würzende Gut nicht aus der Bearbeitungsstraße entfernt und anschließend zur weiteren Verarbeitung wieder eingeführt werden muß.

Fett-und Fettgemische enthaltende Würzmischungen, die bei Raumtemperatur als Pulver vorliegen, können durch einfaches Mischen des Fetts mit den weiteren Bestandteilen der Würzmischung hergestellt werden. Durch Erwärmen auf Temperaturen oberhalb des Schmelzpunkts des verwendeten Fetts, beispielsweise auf 35 bis 120°C, wird die Würzmischung verflüssigt. Nach dem Aufbringen auf das verhältnismäßig kalte Lebensmittel erstarrt das in der Würzmischung enthaltende Fett, so daß schon wenige Sekunden nach dem Auftragen die Oberfläche durch Erstarren des Fetts einen trockenen Überzug bildet. Dies gilt auch für die übrigen verflüssigbaren Materialien. Sorbit wird verflüssigt durch Erwärmen auf eine Temperatur über 112 °C, Dextrosehydrat über 83 °C und Xylit über 94 °C.

Beispielhaft wird anschließend die Herstellung einer trockenen Würzmischung beschrieben. Flüssiges Rinderfett kann mit erwärmten Hartfett derart vermischt werden, daß der Schmelzpunkt des Gemischs, der so hoch liegt, daß die Lagerung im erstarrten Zustand ohne Verflüssigung bei Raumtemperatur möglich ist. Die erwärmte Fettmischung wird dazu auf einer Kühlwalze'in Flockenform gebracht und die Fettflocken anschließend mit den Trockenstoffen wie Salz und Gewürzen gemischt.

Es kann aber auch wie zuvor beschrieben verfahren werden, wobei die Trockenstoffe jedoch in das verflüssigte Fett eingemischt werden. Anschließend wird das Gemisch gekühlt und die Flocken wie zuvor beschrieben hergestellt.

Es ist auch möglich, nur einen Teil der Trockenstoffe in die erwärmte Fettmischung einzuarbeiten und anschließend den Rest der Trockenstoffe mit den Fettflocken zu mischen. Durch die zuletzt genannte Ausführungsform wird ein besseres Schüttverhalten und auch ein besseres Trockenhalten der Würzmischung ermöglicht.

Die Fettflocken oder Fettflockenmischung kann beim Anwender in einem beheizten Behälter mit kräftigem Rührwerk verflüssigt werden und das flüssige Gemisch über eine Spritzdüse auf das zu würzende Gut aufgetragen werden.

Alternativ dazu kann eine Schnecke die Flocken- oder Trockenmischung aufnehmen, verdichten und verflüssigen. Das Erhitzen geschieht durch Friktion und Druck oder mit zusätzlicher Beheizung. Über eine Spritzdüse kann die flüssige Würzmischung dann auf das Gut aufgebracht werden, auf dem die Würzmischung dann erhärtet.

Die Würzmischung eignet sich zum Einsatz in der Lebensmittelindustrie bei der industriellen Würzung von Lebensmitteln. So werden beispielsweise Hähnchenschenkel mit einer Temperatur von etwa 6°C von einer Fördereinrichtung aufgenommen und hängend an einer Düseneinrichtung vorbei transportiert. Durch die Düseneinrichtung wird die Würzmischung auf das Lebensmittel aufgesprüht, welches dabei gedreht wird, so daß das Würzen gleichmäßig von allen Seiten erfolgt.

Gemäß einer besonders bevorzugten Ausführungsform wird vor dem Besprühen mit der Würzmischung das zu würzende Gut mit einem pulverförmigen Stoff bestäubt, der zur Aufnahme der Oberflächenfeuchtigkeit auf dem zu würzenden Gut befähigt ist. Dieser Stoff kann beispielsweise ein übliches Verdickungsmittel, Trennmittel, Mehl, Stärke oder Maltodextrin sein.

Die Erfindung wird durch die folgenden Beispiele weiter erläutert.

### Beispiel 1

| Rezeptur A | |
|---|---|
| **Bestandteile der Würzmischung** | **Gehalt [Gew.%]** |
| Rindertalg, flockenförmig | 28,3 |
| gehärtetes Pflanzenfett | 4;5 |
| Kochsalz | 59,0 |
| Trennmittel (Sipernat®22S) | 1,0 |
| Emulgator | 1,0 |
| Maltodextrin | 5,9 |
| Xanthan Gum | 0,3 |
| | Σ = 100,0 |

| Rezeptur B | |
|---|---|
| **Bestandteile der Würzmischung** | **Gehalt [Gew.%]** |
| Rindertalg, flockenförmig | 17,0 |
| gehärtetes Pflanzenfett | 17,0 |
| Kochsalz | 43,0 |
| Trennmittel (Sipernat®22S) | 1,0 |
| Gewürze | 21,0 |
| Emulgator | 1,0 |
| | Σ = 100,00 |

Die Würzmischungen wurden auf eine Temperatur von 80 °C erwärmt und bei dieser Temperatur gehalten. In der Zwischenzeit wurde eine Zweistoffdüse (Strahlwaschpistole GAV, Westfalia) im Wärmeschrank auf 90 bis 110°C gebracht. Die erwärmte Würzmischung wird in den Flüssigkeitsbehälter der Pistole gegossen und bei einem Druck von 4 bis 8 bar in einer Entfernung von 30 bis 50 cm auf das Geflügel einer Temperatur von 6°C aufgesprüht.

Das Würzmittel erhärtete unmittelbar nach dem Auftreffen auf das kalte Geflügel unter Ausbildung eines gleichmäßigen Films auf demselben.

### Beispiel 2

Sprühfähige Trockenwürzung auf der Basis eines Hydrokolloids

| **Bestandteile** (Rezeptur C) | **Gehalt [Gew.%]** |
|---|---|
| Würzmittel | 28,8 |
| Methylcellulose | 4,3 |
| Maltodextrin | 5,8 |
| Guarkernmehl | 3,2 |
| Salz | 57,9 |

Eine 5%ige Lösung von Agar-Agar mit einer Temperatur von 80 °C wird in einer Menge von etwa 1,5 Gew.%, bezogen auf das Gewicht der Hähnchenschenkel, auf diese gesprüht. Unmittelbar anschließend wird die Trockenwürzung der oben tabellarisch dargestellten Rezeptur über dieselbe Düsenvorrichtung in einer Menge von 0,6 Gew.%, bezogen auf das Gewicht der Hähnchenschenkel, aufgesprüht. Die Temperatur der Hähnchenschenkel betrug 6°C. Das aufgesprühte Material verfestigt sich nach etwa einer Minute und ist ausreichend griffest, um die Schenkel in eine Verpackung zu legen.

### Beispiel 3

Die Rezepturen D und E und die Vergleichsrezepturen VF und VG wurden hergestellt und weisen die in der folgenden Tabelle gezeigte Zusammensetzung auf. Alle Zahlenangaben in der Tabelle geben Gramm (g) an.

| **Bestandteile** | **D** | **E** | **VF** | **VG** |
|---|---|---|---|---|
| Rindertalk, flockenförmig | 367,5 | - | - | - |
| Palmkernfett | - | 350 | - | - |
| gehärtetes Pflanzenfett | 52,5 | 50 | - | - |
| Kochsalz | 100 | 500 | 100 | 500 |
| Trennmittel | 17,5 | 17,5 | - | - |
| Emulgator | 11,25 | 11,25 | - | - |
| Verdicker | 4, 0 | 4,0 | - | - |
| Haftverbesserer | 280 | 50 | 350 | - |
| Würzmittel (ohne Salz) | 250 | 250 | 250 | - |

Alle Trockenmischungen zeigte eine sehr gute Rieselfähigkeit, die erfindungsgemäßen Proben zeigten eine gute Fließfähigkeit bei 50°C. Probe D zeigt eine sehr gute Fließfähigkeit.

Schweineschnitzel wurden mit etwa 10 Gew.% der Sprühwürzung, bezogen auf das Schnitzelgewicht, besprüht. Zum Vergleich wurden Schnitzel mit 3,5 Gew.% der Trockenwürzung, bezogen auf das Schnitzelgewicht, eingerieben. Alle Proben wurden in eine Kunststoffolie verpackt und im Kühlschrank über Nacht belassen. Die Temperatur im Kühlschrank betrug 4°C.

Anschließend wurden die Schnitzel unter gleichen Bedingungen (Pfanne, Wärme, Zeit) gegart und sensorisch miteinander verglichen. Beurteilt wurde das Aussehen des gebratenen Lebensmittels, das Aroma der Gewürzmischung in seiner Stärke und in seinem Profil und die Salzstärke.
Die Benotung erfolgte mit sehr gut (1) bis sehr schlecht (5) und mit > (zu stark) und < (zu schwach) und mit i.O. (in Ordnung).

| **Zu prüfende Eigenschaft** | **Bewertung** | |
|---|---|---|
| | **D** | **VF** |
| Eindruck Salzgehalt | 1 | 2-3 |
| Haftung der Gewürze beim Braten | 2 | 4 |
| Aromaentfaltung im Schnitzel | 1 | 3 |
| Panadenähnliche Schicht | 2 | nein |
| Bräunung am Schnitzel | 2 | » |
| Sonstiges | - | Neigung zum Anbrennen |

Bei den Sprühwürzungen wurde eine deutliche Verbesserung der Würzfähigkeit beobachtet. Der Salzgeschmack und das Aroma wurden als deutlich intensiver gegenüber der konventionellen Trockenwürzung empfunden. Darüber hinaus wurde es durch das Aufsprühen des Würzmittels möglich, Bestandteile auf das Schnitzel zu bringen, die beim Braten eine krokante Kruste bilden, die das gegarte Lebensmittel paniert aussehen und empfinden lassen. Außer dieser krokanten Oberfläche haben weitere Versuche gezeigt, daß die Erhöhung der Zuckerstoffe in der Würzmischung oder der Anteil an stärkehaltigen) Komponenten (Weizenmehl/Stärke als Haftverbesserer) zu einer gleichmäßigeren oder intensiveren Bräunung der Oberfläche des Lebensmittels führt. Die Bildung von Reaktionsaromen durch Vorlage von Reaktionspartnern in den Würzmischungen wird gegenüber Trockenmischungen gefördert.

Mit der Würzmischung E wurde ein trockenes Hähnchen in einer Menge von 1,25 Gew.%, bezogen auf das Hähnchengewicht, besprüht. Das Hähnchen hatte beim Besprühen eine Temperatur von 7°C, die aufgesprühte Würzung eine Temperatur von 80°C. Diese verfestigt sich unmittelbar nach Auftritt auf die Oberfläche des Lebensmittels.

Zum Vergleich wurde die gleiche Hähnchensorte bei einer Temperatur von 5 bis 7°C mit einer Trockenwürzung in einer Menge von 0,75 Gew.%, bezogen auf das Gewicht des Hähnchens, 30 Minuten lang im Labortumbler behandelt.

Die Hähnchen wurden in einer Folie verpackt, im Kühlschrank über Nacht gelagert und am folgenden Tag in einem Grill mit rotierenden Spießen gegrillt. So war sichergestellt, daß beide Hähnchen unter denselben Bedingungen zubereitet wurden. Nach 45 Minuten Grillzeit wurden die Hähnchen sensorisch verglichen. Beurteilt wurde das Aussehen, das Aroma der Gewürzmischung in seiner Stärke und in seinem Profil und die Salzstärke. Die Bewertung erfolgt unter Anwendung des oben angegebenen Schemas.

| **Zu prüfende Eigenschaft** | **Bewertung** | |
|---|---|---|
| | E | VF |
| Eindruck Salzgehalt | 1 | < |
| Aromaentfaltung im Fleisch | 1 | < |
| Salzverteilung | 1 | 3 |
| Bräunung der Haut | 1-2 | 3 |
| Saftgehalt im Fleisch | 1 | 3 |
| Sonstiges | - | Neigung zum Anbrennen |

Bei der Sprühwürzung konnte man eine deutliche Verbesserung der Würzfähigkeit beobachten, darüber hinaus war festzustellen, daß die Haut während des Grillens ständig saftiger gegenüber der traditionellen Würzung aussah. Bei der Verkostung fiel des weiteren der Feuchtegrad der besprühten Hähnchens auf. Das Fleisch war nach der Zubereitung deutlich saftiger.

Entsprechende Untersuchungen wurden auch mit Hähnchenschenkel vorgenommen, die jedoch in einem Umluftbackofen bei einer Temperatur von 150°C 45 Minuten lang gegart wurden. Obwohl zum Würzen dieselben Stoffe und dieselbe Salzmenge verwendet wurde, zeigten die besprühten Lebensmittelproben einen intensiveren Salzgeschmack und intensiveres Aroma. Die traditionell gewürzten Hähnchenschenkel neigten darüber hinaus zum Verbrennen und Austrocknen der Haut.

## Patentansprüche

1. Verfahren zum Würzen von Lebensmitteln, **dadurch gekennzeichnet, daß** man auf das Lebensmittel Salz, verflüssigbares Fett und gegebenenfalls weitere Komponenten zusammen in einer flüssig aufzutragenden Form aufbringt und das Fett unter Ausbildung einer Salz enthaltenden, festen Schicht auf dem Lebensmittel erhärten läßt.

2. Verfahren nach Anspruch 1, **dadurch gekennzeichnet, daß** man eine Würzmischung, die das verflüssigbare Fett in nicht-verflüssigter Form und, in einem Anteil von 15 bis 67 Gew.-%, bezogen auf das Gewicht der Würzmischung, Salz enthält, soweit erwärmt, daß die Würzmischung flüssig aufgetragen werden kann, und dieses Gemisch anschließend auf das Lebensmittel aufbringt.

3. Verfahren nach Anspruch 1 bis 2, **dadurch gekennzeichnet, daß** als Fett in der Würzmischung ein solches verwendet wird, das einen Schmelzpunkt von mehr als 10°C aufweist.

4. Verfahren nach einem der Ansprüche 1 bis 2, **dadurch gekennzeichnet, daß** der Anteil an Fett 30 bis 45 Gew.-%, bezogen auf das Gewicht der Würzmischung, beträgt.

5. Verfahren zum Würzen von Lebensmitteln, **dadurch gekennzeichnet, daß** man auf das Lebensmittel ein Gemisch in einer flüssig aufzutragenden Form aufbringt, das Salz und ein verflüssigbares Material enthält, das ausgewählt ist aus der Gruppe, bestehend aus Hydrokolloiden, Gelatine, Emulgatoren und Kohlenhydraten, und das Gemisch unter Ausbildung einer Salz enthaltenden, festen Schicht auf dem Lebensmittel erhärten läßt.

6. Verfahren nach Anspruch 5, **dadurch gekennzeichnet, daß** das flüssig aufzutragende Gemisch eine Würzmischung umfaßt, die das verflüssigbare Material, Salz und ggf. weitere Komponenten enthält.

7. Verfahren nach Anspruch 6, **dadurch gekennzeichnet, daß** man die Würzmischung soweit mit Wasser oder einer wäßrigen Lösung vermischt, daß das Gemisch flüssig aufgetragen werden kann, und dieses Gemisch anschließend auf das Lebensmittel aufbringt.

8. Verfahren nach einem der Ansprüche 1 bis 4 und 6 bis 7, **dadurch gekennzeichnet, daß** der Salzanteil 20 bis 45 Gew.-%, bezogen auf das Gewicht der Würzmischung, beträgt.

9. Verfahren nach einem der Ansprüche 1 bis 4 und 6 bis 8, **dadurch gekennzeichnet, daß** die Würzmischung in der Lebensmittelindustrie übliche Verdickungsmittel enthält.

10. Verfahren nach einem der Ansprüche 1 bis 4 und 6 bis 9, **dadurch gekennzeichnet, daß** die Würzmischung Haftverstärker wie Zuckerstoffe, Emulgatoren, Eiweißstoffe, Stärke und/oder pflanzliche Fasern enthält.

11. Verfahren nach einem der Ansprüche 1 bis 4 und 6 bis 10, **dadurch gekennzeichnet, daß** die Würzmischung mineralische Bestandteile wie Siliziumdioxid und/oder Titandioxid enthält.

12. Verfahren nach einem der vorangehenden Ansprüche, **dadurch gekennzeichnet, daß** das aufzutragende Gemisch auf das Lebensmittel aufgesprüht wird.

13. Verfahren nach einem der Ansprüche 1 bis 11, **dadurch gekennzeichnet, daß** das Lebensmittel in das aufzutragende Gemisch eingetaucht wird.

14. Lebensmittel, erhältlich mit einem Verfahren nach einem der Ansprüche 1 bis 13.

15. Lebensmittel nach Anspruch 14, **dadurch gekennzeichnet, daß** das Lebensmittel ausgewählt ist aus der Gruppe, die aus Geflügel, Geflügelteilen, Fleisch, Fisch, Gemüse und Teigwaren besteht.

## Claims

1. A process for spicing foods, **characterised in that** there is applied to the food salt, liquefiable fat and, if required, other components together in a form for liquid application and the fat is left to set with the formation of a salt-containing solid coating on the food.

2. A process according to claim 1, **characterised in that** a spice mixture which contains the liquefiable fat in non-liquefied form and salt in a proportion of 15 to 67% by weight based on the weight of the spice mixture, is heated to an extent such that the spice mixture can be applied in liquid form and this mixture is then applied to the food.

3. A process according to claims 1 to 2, **characterised in that** the fat used in the spice mixture is one having a melting point of more than 10°C.

4. A process according to any one of claims 1 to 2, **characterised in that** the proportion of fat is 30 to 45% by weight based on the weight of the spice mixture.

5. A process for spicing foods, **characterised in that** there is applied to the food a mixture in a form for liquid application, which contains salt and a liquefiable material selected from the group consisting of hydrocolloids, gelatin, emulsifiers and carbohydrates, and the mixture is left to set with the formation of a salt-containing solid coating on the food.

6. A process according to claim 5, **characterised in that** the mixture for liquid application comprises a spice mixture which contains the liquefiable material, salt, and, if required, other components.

7. A process according to claim 6, **characterised in that** the spice mixture is mixed with water or an aqueous solution until the mixture can be applied in liquid form, and this mixture is then applied to the food.

8. A process according to any one of claims 1 to 4 and 6 to 7, **characterised in that** the salt proportion is 20 to 45% by weight based on the weight of the spice mixture.

9. A process according to any one of claims 1 to 4 and 6 to 8, **characterised in that** the spice mixture contains thickening agents conventional in the food industry.

10. A process according to any one of claims 1 to 4 and 6 to 9, **characterised in that** the spice mixture contains adhesion boosters such as sugars, emulsifiers, proteins, starch and/or vegetable fibres.

11. A process according to any one of claims 1 to 4 and 6 to 10, **characterised in that** the spice mixture contains mineral constituents such as silicon dioxide and/or titanium dioxide.

12. A process according to any one of the preceding claims, **characterised in that** the mixture for application is sprayed on to the food.

13. A process according to any one of claims 1 to 11, **characterised in that** the food is immersed in the mixture for application.

14. A food obtainable with a process according to any one of claims 1 to 13.

15. A food according to claim 14, **characterised in that** the food is selected from the group consisting of poultry, poultry parts, meat, fish, vegetables and pastry products.

## Revendications

1. Procédé pour assaisonner des produits alimentaires, **caractérisé en ce que** du sel, une graisse liquéfiable et le cas échéant d'autres composants sont appliqués ensemble sur le produit alimentaire sous une forme liquide à étaler et **en ce que** la graisse se durcit sur le produit alimentaire en formant une couche solide , contenant du sel.

2. Procédé selon la revendication 1, **caractérisé en ce qu'**un mélange pour assaisonnement, qui comprend la graisse liquéfiable sous forme non liquéfiée et, du sel selon une proportion de 15 à 67 % en poids, par rapport au poids du mélange pour assaisonnement, est chauffé jusqu'à ce que le mélange pour assaisonnement puise être appliqué de manière liquide et ce mélange est ensuite appliqué sur le produit alimentaire.

3. Procédé selon les revendications 1 à 2, **caractérisé en ce que** la graisse utilisée dans le mélange pour assaisonnement présente un point de fusion supérieure à 10°C.

4. Procédé selon l'une des revendications 1 à 2, **caractérisé en ce que** la proportion de graisse représente 30 à 45 % en poids, par rapport au poids du mélange pour assaisonnement.

5. procédé pour assaisonner des produits alimentaires, **caractérisé en ce qu'**un mélange, sous forme liquide et à étaler, est appliqué sur le produit alimentaire, il comprend du sel et une matières liquéfiable, qui est sélectionnée dans le groupe composé d'hydrocolloïdes, de gélatine, d'émulsifiants et d'hydrates de carbone, et le mélange durcit sur le produit alimentaire en formant une couche solide comprenant du sel.

6. Procédé selon la revendication 5, **caractérisé en ce que** le mélange à étaler sous forme liquide comprend un mélange pour assaisonnement, qui contient la matière liquéfiable, le sel et le cas échéant d'autres ingrédients.

7. Procédé selon la revendication 6, **caractérisé en ce que** le mélange pour assaisonnement est mélangé avec de l'eau ou une solution aqueuse jusqu'à ce le mélange puisse être étalé sous une forme liquide et ce mélange e est ensuite appliqué sur le produit alimentaire.

8. Procédé selon l'une des revendications 1 à 4 et 6 à 7, **caractérisé en ce que** la proportion de sel s'élève à 20 à 45 % en poids, par rapport au poids du mélange pour assaisonnement.

9. Procédé selon l'une des revendications 1 à 4 et 6 à 8, **caractérisé en ce que** le mélange pour assaisonnement contient des épaississants utilisés ordinairement dans l'industrie alimentaire.

10. Procédé selon l'une des revendications 1 à 4 et 6 à 9, **caractérisé en ce que** le mélange pour assaisonnement contient des agents renforçant l'adhérence tels que des substances sucrées, des émulsifiants, de l'albumine, de l'amidon et/ou des fibres végétales.

11. Procédé selon l'une des revendications 1 à 4 et 6 à 10, **caractérisé en ce que** le mélange pour assaisonnement contient des ingrédients minéraux tels que du dioxyde de silicium et/ou du dioxyde de titane.

12. Procédé selon l'une des revendications précédentes, **caractérisé en ce que** le mélange à étaler sur le produit alimentaire est pulvérisé.

13. Procédé selon l'une des revendications 1 à 11, **caractérisé en ce que** le produit alimentaire est plongé dans le mélange à étaler.

14. Produit alimentaire, pouvant être obtenu grâce à un procédé selon l'une des revendications 1 à 13.

15. Produit alimentaire selon la revendication 14, **caractérisé en ce que** le produit alimentaire est sélectionné dans le groupe composé de volailles, morceaux de volaille, poissons, viandes, légumes et pâtes alimentaires.
